# EUROPEAN PATENT SPECIFICATION

(11) **EP 1 948 562 B1**
(45) Date of publication and mention of the grant of the patent: **21.07.2010**
(21) Application number: 06764432.8
(22) Date of filing: 15.06.2006
(51) Int. Cl.: C01B 31/02

(54) **CARBON NANOTUBES FUNCTIONALIZED WITH FULLERENES**
MIT FULLERENEN FUNKTIONALISIERTE KOHLENSTOFFNANORÖHREN
NANOTUBES DE CARBONE FONCTIONNALISES AVEC DES FULLERENES

(30) Priority: 16.11.2005 FI 20051171
(43) Date of publication of application: 30.07.2008
(73) Proprietor: Canatu Oy, 02150 Espoo (FI)
(72) Inventor: KAUPPINEN, Esko, FI-00730 Helsinki (FI); BROWN, David P., FI-02110 Espoo (FI); NASIBULIN, Albert G., FI-02760 Espoo (FI); JIANG, Hua, FI-02150 Espoo (FI)
(74) Representative: Helino, Timo Kalervo
(86) International application number: PCT/FI2006/000206
(87) International publication number: WO 2007/057501

(56) References cited:
- WO-A2-02/39051
- WO-A2-2005/085130
- AU-A- 3 127 099
- NASIBULIN A.G. ET AL.: 'A novel aerosol method for single walled carbon nanotube synthesis' CHEMICAL PHYSICS LETTERS vol. 402, 2005, pages 227 - 232, XP004702435

## Description

The present invention relates to fullerene functionalized carbon nanotubes, to a method for their production, to a functional material, to a thick or thin film, line, wire and a layered and three dimensional structure, and to a device as defined in the claims.

### PRIOR ART

Both fullerenes and carbon nanotubes (CNTs) exhibit unique and useful chemical and physical properties related to, for example, their morphology, toughness, electrical and thermal conductivity and magnetic characteristics.

CNT functionalization has been shown to be a route, for example, to make CNTs processable, to improve their bonding with matrix materials and modify CNT properties for specific applications. CNTs have been functionalized by various compounds, for example, with carboxyl groups, sodium dodecyl sulfates, with thiol, amine, amide, carbonyl, and chloride groups, by erbium bisphthalocyanine and poly(N-vinyl carbazole). Further, organic functionalization of CNTs have been used as an intermediate CNT purification step.

Further, fullerenes in the presence of CNTs have been reported. For example the existence of non-covalently bonded fullerenes among produced CNTs have been reported. Using fullerenes as templates for CNT growth has been reported. Non-covalently bonded fullerenes have been included inside CNTs (nanotube peapods).

However, a problem with the prior-art functionalization procedures is that CNTs are functionalized after the synthesis, which is time consuming and energy and resource intensive, increases the loss of product and can add additional impurities. Further, with prior art methods, it has not been possible to covalently attach fullerenes to the outer surface of carbon nanotubes.

The industrial and scientific utility of produced CNTs is a function of their individual and collective properties and a further problem is that the prior-art methods of CNT production are not able to adequately control properties for many commercial applications. Controllable and selective manipulation of functional groups would result in desirable tailoring of the properties of CNTs and CNT composites.

The objective of the present invention is to eliminate the drawbacks referred to above.

One specific objective of the invention is to disclose a new material, fullerene functionalized carbon nanotubes, which differs from prior art materials. The objective of the present invention is to disclose a covalently bonded fullerene-CNT structure and a method and an apparatus for its production. A further objective of the present invention is to disclose different end products of said fullerene functionalized carbon nanotubes.

### SUMMARY OF THE INVENTION

The fullerene functionalized carbon nanotube, the method, the apparatus, the functional material, the thick or thin film, line, wire and the layered and three dimensional structure, and the device of the invention are characterised by what has been presented in the claims.

The invention is based on research work carried out in which it was surprisingly found that it is possible to produce a fullerene functionalized carbon nanotube, which comprises one or more binding the fragments together. In publication AU 199931270 the nanotubes are synthesized from phenanthrene precursors which are mixed and annealed. Tubular structure is achieved with reagents bound to the sides of the precursor molecules that aid the precursor phenanthrene derived chains to form closed rings. The closed rings are chained with reagents in a similar manner to yield longer carbon nanotubes. Carbon nanonets are formed using reagents that are bound to the ends of individual carbon nanotubes or surfaces on fullerene buckyballs. In Publication AU 199931270 the buckyballs are always added to the carbon nanotube ends, where they act as junctions between nanotubes to form networks. Separate buckyballs do not appear on the walls of individual carbon nanotubes. In the publication carbon nanonets are formed in a stepwise manner in multiple separate stages.

The objective of the present invention is to eliminate the drawbacks referred to above.

One specific objective of the invention is to disclose a new material, fullerene functionalized carbon nanotubes, which differs from prior art materials. The objective of the present invention is to disclose a covalently bonded fullerene-CNT structure and a method for its production. A further objective of the present invention is to disclose different end products of said fullerene functionalized carbon nanotubes.

### SUMMARY OF THE INVENTION

According to a first aspect, the invention provides a fullerene functionalized carbon nanotube in accordance with independent claim 1.

According to a second aspect, the invention provides a method for producing at least one fullerene and/or a fullerene based molecule covalently bonded to the outer surface and/or inner surface the at least one carbon nanotube in accordance with independent claim 9.

According to a third aspect, the invention provides a functional material in accordance with independent claim 21.

According to a fourth aspect, the invention provides a thick or thin film a line, a wire or a layered or three dimensional structure in accordance with independent claim 22.

According to a fifth aspect, the invention provides the using of one or more fullerene functionalized carbon nanotubes in accordance with independent claim 23.

Further aspects of the invention are set forth in the dependent claims, the drawings and the following description.

The invention is based on research work carried out in which it was surprisingly found that it is possible to produce a fullerene functionalized carbon nanotube, which comprises one or more fullerenes and/or fullerene based molecules covalently attached to the carbon nanotube.

The present invention relates to a fullerene functionalized carbon nanotube (FFCNT), which comprises one or more fullerenes and/or fullerene based molecules covalently bonded to the carbon nanotube (herein also called as CBFFCNT, covalently bonded fullerene functionalized carbon nanotube or fullerene-functionalized carbon nanotube). A carbon nanotube can comprise only carbon atoms but also the carbon nanotube can comprise carbon atoms and also one or more other atoms. The carbon nanotube can have a cylindrical or a tube-like structure with open and/or closed ends. Also other carbon nanotube structures are possible.

By a fullerene is meant a molecule, which comprises carbon and which is substantially spherical, ellipsoidal or ball-like in structure. The fullerene can be hollow with a closed surface or it can have a substantially spherical structure, which is not be completely closed but instead has one or more open bonds. The fullerene can, for example, have a substantially hemisphere-like form and/or any other sphere-like form.

By a fullerene based molecule is meant any of the above mentioned molecules, wherein one or more carbon atoms in the molecule are replaced with one or more, for example non-carbon, atoms, molecules, groups and/or compounds, and/or wherein one or more additional atoms, molecules, groups and/or compounds are included in the fullerene molecule and/or wherein one or more additional atoms, molecules, groups and/or compounds are attached to the surface of the fullerene molecule. Only as one non-limiting example it can be mentioned that one or more other fullerenes can be attached to said surface.

The one or more fullerenes and/or fullerene based molecules can be covalently bonded to the outer surface and/or to the inner surface of the carbon nanotube, preferably to the outer surface. Said fullerene and/or fullerene based molecule can comprise 20 - 1000 atoms. The fullerene and/or fullerene based molecule can be covalently bonded via one or more bridging groups and/or can be directly covalently bonded to the carbon nanotube. By a bridging group is meant any atom, element, molecule, group and/or compound via which the covalent attachment to the carbon nanotube is possible. A suitable bridging group can comprise for example any element from the groups IV, V, VI of the periodic table of elements. A suitable bridging group can comprise for example oxygen, hydrogen, nitrogen, sulphur, an amino, a thiol, an ether, an ester and/or a carboxylic group and/or any other suitable group and/or their derivatives. A suitable bridging group can comprise a carbon-containing group. Alternatively or additionally the fullerene and/or fullerene based molecule can be directly covalently bonded. For example, the fullerene and/or fullerene based molecule can be directly covalently bonded through one or more carbon bonds.

According to the present invention the carbon nanotube can comprise a single, a double or a multiple walled carbon nanotube or a composite carbon nanotube. The carbon nanotube can be formulated in a gas, liquid and/or solid dispersion, a solid structure, a powder, a paste and/or a colloidal suspension and/or can be deposited and/or synthesized on a surface.

The fullerene functionalized carbon nanotube can be bonded through one or more fullerenes and/or fullerene based molecules to one or more carbon nanotubes and/or fullerene functionalized carbon nanotubes. In other words, for example, two fullerene functionalized carbon nanotubes can be attached to each other through a common fullerene molecule.

Further, the present invention relates to the method for producing one or more fullerene functionalized carbon nanotubes. Said method comprises: bringing one or more catalyst particles, carbon sources and/or reagents into contact with each other and heating in a reactor to produce one or more carbon nanotubes comprising one or more fullerenes and/or fullerene based molecules covalently bonded to the one or more carbon nanotubes. Said step of bringing one or more catalyst particles, carbon sources and/or reagents into contact with each other can comprise, for example, any suitable way of introducing them into contact with each other, mixing and/or any other suitable way of bringing into contact with each other. The method is performed in a suitable reactor. In this way one or more fullerene-functionalized carbon nanotubes according to the present invention are produced.

In the method according to the present invention said carbon nanotubes can be produced in a gas phase as an aerosol and/or on a substrate. Further, the method can be a continuous flow or batch process or a combination of batch and continuous sub-processes.

Various carbon containing substances can be used as a carbon source. Also a carbon containing precursor, which forms a carbon source, can be used. The carbon source can be selected from a group, which consists of one or more alkanes, alkenes, alkynes, alcohols, aromatic hydrocarbons and any other suitable group, compound and material. The carbon source can be selected from a group, which consists of, for example, gaseous carbon compounds such as methane, ethane, propane, ethylene, acetylene, carbon monoxide as well as liquid volatile carbon sources such as benzene, toluene, xylene, trimethylbenzene, methanol, ethanol, and octanol and any other suitable compounds and their derivatives. Thiophene can also be used as a carbon source. Carbon monoxide gas is preferred as a carbon source. One or more carbon sources can be used. If used the carbon precursors can be activated at a desired location in the reactor by using, for example, heated filaments and plasmas.

In one embodiment of the present invention the one or more carbon sources also act as one or more catalyst particle sources, reagents, reagent precursors and/or additional reagents.

The carbon source can be introduced into the reactor at a rate of 5 - 10000 ccm, preferably 50 - 1000 ccm, for example about 300 ccm. The pressures of different materials used in the method, for example carbon sources, can be 0,1 - 1000 Pa, preferably 1 - 500 Pa.

According to the present invention one or more reagents can be used in the production of said carbon nanotubes. The reagent can be an etching agent. The reagent can be selected from a group, which consists of hydrogen, nitrogen, water, carbon dioxide, nitrous oxide, nitrogen dioxide and oxygen. Further, said reagents can be selected, for example, from organic and/or inorganic oxygen containing compounds such as ozone (O₃) and various hydrides. The one or more reagents used in the method can be selected from carbon monoxide, octanol and/or thiophene. The reagent(s) used in the present invention are water vapor and carbon dioxide. Also any other suitable reagent can be used in the method according to the present invention. Other reagents and/or reagent precursors can be used also as a carbon source and vice versa. Examples of such reagents are for example ketones, aldehydes, alcohols, esters and/or ethers and/or any other suitable compounds.

In the method according to the invention one or more reagents and/or, for example, reagent precursors can be introduced into the reactor, for example, together with the carbon source or separately. The one or more reagents/reagent precursors can be introduced to the reactor at concentration of 1 - 12000 ppm, preferably 100 - 2000 ppm.

The concentration of one or more fullerenes and/or fullerene based molecules covalently attached to the carbon nanotube can be adjusted. The adjustment can be done by adjusting the amount, for example the concentration, of one or more reagents used, by adjusting the heating temperature and/or by adjusting the residence time. The adjustment is done in accordance with the synthesis method. The heating can be performed at a temperature of 250 - 2500 °C, preferably 600 - 1000 °C. When, for example, H₂O and CO₂ are used as reagents the reagent concentrations can be between 45 and 245 ppm, preferably between 125 and 185 ppm, for water and between 2000 and 6000 ppm, preferably about 2500 ppm, for CO₂. In this way a fullerene density above 1 fullerene/nm can be provided. At specific concentrations of one or more reagents also the heating temperature can be found to have an optimal range.

According to the present invention various catalyst materials, which catalyze the process of carbon source decomposition/disproportionation, can be used. The catalyst particles used in the present invention can comprise for example various metal and/or non-metal materials. Preferred catalyst particle comprises a metal, preferably a transition metal and/or a combination of metals and/or transition metals. Preferably the catalyst particle comprises iron, cobalt, nickel, chromium, molybdenum, palladium and/or any other similar element. Said catalyst particles can be formed from a chemical precursor, for example ferrocene, for example by thermal decomposition of ferrocene vapor. The catalyst particles can be produced by heating a metal or metal containing substance.

Said catalyst particles/catalyst precursors can be introduced to the reactor at a rate of 10 - 10000 ccm, preferably 50 - 1000 ccm, for example about 100 ccm.

The catalyst particles used in the method according to the present invention can be produced by various methods. Examples of such methods comprise, for example, chemical vapor decomposition of catalyst precursor, physical vapor nucleation, or the catalyst particles can, for example, be produced of droplets made by electrospray, ultrasonic atomization, air atomization and the like from, for example, metal salt solutions, as well as colloidal metal nanoparticle solutions, or thermal drying and decomposition and/or by using any other applicable methods and/or processes and/or materials. Any other procedures for the production of the particles, for example, adiabatic expansion in a nozzle, arc discharge and/or electrospray system can be used for the formation of catalyst particles. A hot wire generator can be used for the production of catalyst particles. Other means of heating and/or vaporizing a metal containing mass so as to generate a metal vapor are possible according to the invention.

Catalyst particles can also be synthesized in advance and then introduced into the reactor. However, generally, particles of the size range needed for CBFFCNT production are difficult to handle and/or store and thus it is preferable to produce them in the vicinity of the reactor as an integrated step in the production process.

Aerosol and/or surface supported catalyst particles can be used in the production of said carbon nanotubes. Catalyst particle precursors can be used for the production of catalyst particles.

For substrate supported production of carbon nanotubes according to the present invention, catalyst particles can be produced directly on the substrate and/or deposited from the gas phase by diffusion, thermophoresis, electrophoresis, inertial impaction and/or by any other means.

For the chemical method of catalyst particle production, metalorganic, organometallic and/or inorganic compounds, for example, metallocene, carbonyl, chelate compounds and/or any other suitable compounds can be used as catalyst precursors.

For the physical method of catalyst particle production, for example pure metals or their alloys can be evaporated by using various energy sources such as resistive, inductive, plasma, conductive or radiative heating or chemical reaction (wherein the concentration of produced catalyst vapor is below the level needed for nucleation at the location of release) and subsequently nucleated, condensed and/or coagulated from supersaturated vapor. Means of creating supersaturated vapor leading to the formation of catalyst particles in the physical method include gas cooling by convective, conductive and/or radiative heat transfer around, for example, a resistively heated wire and/or adiabatic expansion in, for example, a nozzle.

For the thermal decomposition method of catalyst particle production, for example inorganic salts can be used, such as nitrates, carbonates, chlorides and/or fluorides of various metals and/or any other suitable materials.

The method of the present invention may further comprise the step of introducing one or more additional reagents. Said additional reagents can be used to promote the formation of carbon nanotubes, to vary the rate of carbon source decomposition, to react with amorphous carbon during and/or after the production of said carbon nanotubes and/or to react with said carbon nanotubes, for example, to purify, to dope and/or to further functionalize the carbon nanotubes. Additional reagents can be used according to the present invention for participation in the chemical reaction with catalyst particle precursor, with catalyst particles, with carbon source, with amorphous carbon and/or with a carbon nanotube having thereto covalently bonded one or more fullerenes and/or fullerene based molecules. The one or more additional reagents can be introduced together with the carbon source or separately.

As a promoter, i.e. an additional reagent, for CBFFCNT formation according to the present invention additional reagents such as sulphur, phosphorus and/or nitrogen elements and/or their compounds, such as thiophene, PH₃, NH₃, can be used. Additional promoter reagents can be selected from H₂O, CO₂, NO and/or any other suitable elements and/or compounds.

Purification processes may in some cases be needed to remove, for example, undesirable amorphous carbon coatings and/or catalyst particles encapsulated in CBFFCNTs. In the present invention it is possible to have one or more separated heated reactors/reactor sections, where one reactor or section of the reactor is used to produce CBFFCNTs and the other(s) is(are) used, for example, for purification, further functionalization and/or doping. It is also possible to combine these steps.

As a chemical for amorphous carbon removal, any compounds, their derivatives and/or their decomposition products formed *in situ* in the reactor, which preferably react with amorphous carbon rather than with graphitized carbon, can be used. As an example of such reagent, one or more alcohols, ketones, organic and/or inorganic acids can be used. Additionally, oxidizing agents such as H₂O, CO₂ and/or NO can be used. Other additional reagents are also possible according to the present invention.

In one embodiment of the present invention the one or more additional reagents can be used to further functionalize the CBFFCNTs. Chemical groups and/or nanoparticles attached to CBFFCNTs alter the properties of the produced CBFFCNTs. As an example, the doping of CBFFCNTs by boron, nitrogen, lithium, sodium, and/or potassium elements leads to the change of the conductivity of CBFFCNTs, namely, to obtain CBFFCNTs possessing superconductive properties. Functionalization of carbon nanotubes with fullerenes allows further functionalization of the carbon nanotubes via the attached fullerenes. In the present invention, the *in situ* functionalization and/or doping can be achieved via the introduction of appropriate reagent before, during and/or after CBFFCNT formation.

In one embodiment of the present invention the one or more additional reagents can also behave as a carbon source, a carrier gas and/or a catalyst particle source.

In one embodiment of the present invention the method further comprises the step of introducing one or more additives into the reactor to produce a fullerene functionalized carbon nanotube composite material. One or more additives can be used according to the present invention for example for coating and/or mixing with the produced CBFFCNTs to create CBFFCNT composites. The purpose of the additives are, for example, to increase the catalytic efficiency of CBFFCNTs deposited in a matrix and/or to control matrix properties such as hardness, stiffness, chemical reactivity, optical characteristics and/or thermal and/or electrical conductivity and/or expansion coefficient. As a coating or aerosolized particle additive for CBFFCNT composite materials, preferably one or more metal containing and/or organic materials such as polymers and/or ceramics, solvents and/or aerosols thereof can be used. Any other suitable additives can also be used according to the present invention. The resulting composite can be, for example, directly collected, deposited in a matrix and/or deposited on a surface. This can be done by electrical, thermophoretic, inertial, diffusional, turbophoretic, gravitational and/or other suitable forces to form, for example, thick or thin films, lines, structures and/or layered materials. CBFFCNTs can be coated with one or more additive solids or liquids and/or solid or liquid particles to constitute a CBFFCNT composite.

Said additives can be deposited as a surface coating on the CBFFCNTs through, for example, condensation of supersaturated vapor, chemical reaction with previously deposited layers, doping agents and/or functional groups and/or by other means or, in the case that the additive is a particle, mixed and agglomorated in the gas phase. Additionally, gas and particle deposition on CBFFCNTs can be combined.

In one embodiment of the present invention one or more carrier gases can be used for introduction of the above mentioned materials into the reactor if needed. Carrier gases can also, if desired, act as carbon sources, catalyst particle sources, reagent sources and/or additional reagent sources.

In one embodiment of the present invention the method further comprises the step of collecting the produced one or more fullerene functionalized carbon nanotubes and/or fullerene functionalized carbon nanotube composite material in a solid, liquid or gas dispersion, a solid structure, a powder, a paste, a colloidal suspension and/or as a surface deposition.

In one embodiment of the present invention the method further comprises the step of depositing a dispersion, for example a gas dispersion, of produced fullerene functionalized carbon nanotubes and/or fullerene functionalized carbon nanotube composite material onto a surface and/or into a matrix and/or a layered structure and/or a device.

Controlled deposition of synthesized materials can be achieved by various means including, but not limited to, inertial impaction, thermophoresis and/or migration in an electrical field to form desired geometries (e.g. lines, dots, films or three-dimensional structures) with desired properties such as electrical and/or thermal conductivity, opacity and/or mechanical strength, hardness and/or ductility. Means to achieve controlled deposition of synthesized materials further include, but are not limited to gravitational settling, fiber and barrier filtration, inertial impaction, thermophoresis and/or migration in an electrical field to form desired geometries (e.g. lines, dots or films) with desired properties such as electrical and/or thermal conductivity, opacity and/or mechanical strength, hardness and/or ductility. A suitable apparatus for producing one or more fullerene functionalized carbon nanotubes comprises a reactor for heating one or more catalyst particles, carbon sources and/or reagents to produce one or more carbon nanotubes comprising one or more fullerenes and/or fullerene based molecules covalently bonded to the one or more carbon nanotubes.

The apparatus can further comprise one or more of the following: means for producing catalyst particles; means for introducing one or more catalyst particles; means for introducing one or more catalyst particle precursors; means for introducing one or more carbon sources; means for introducing one or more carbon source precursors; means for introducing one or more reagents; means for introducing one or more reagent precursors; means for introducing one or more additional reagents; means for introducing one or more additives; means for collecting the produced one or more fullerene functionalized carbon nanotubes and/or fullerene functionalized carbon nanotube composite material; means for depositing a dispersion, for example a gas dispersion, of produced fullerene functionalized carbon nanotubes and/or carbon nanotube composite material; means for supplying energy to said means for producing catalyst particles and/or to the reactor. Said means used for introducing the above different materials for example into the reactor and/or into any other part of the apparatus, can comprise for example one and the same means or different means. For example, in one embodiment of the present invention one or more carbon sources and reagents are introduced into the reactor by using the one and the same means. Further, if needed, the apparatus can comprise mixing means within the reactor.

The apparatus can comprise one or more reactors, which can allow continuous and/or batch production of CBFFCNTs, further functionalized CBFFCNTs, doped CBFFCNTs and/or composites thereof. The reactors can be configured in series and/or parallel to achieve various final compositions. Additionally said reactors can be operated in full or partial batch procedures.

The reactor can comprise, for example, a tube comprising, for example, ceramic material, iron, stainless steel and/or any other suitable material. The reactor surfaces can be comprised of material which catalytically produces the one or more reagents needed for the production of CBFFCNTs from one or more reagent precursors introduced, for example upstream, in the reactor.

The inner diameter of said tube can be, for example, 0,1 - 200 cm, preferably 1,5 - 3 cm, and the length of said tube can be, for example, 1 - 2000 cm, preferably 25 - 200 cm. Any other dimensions for, for example, industrial applications, are also applicable.

When using the apparatus then the operating pressure in the reactor can be, for example 0,1 - 10 atm, preferably 0,5 - 2 atm, for example about 1 atm. Further, the temperature in the reactor can be, 250 - 2500 °C, for example 600 - 1000 °C.

The means for producing catalyst particles can comprise for example a pre-reactor. Said means can comprise, for example, a hot wire generator. The apparatus can further comprise any other suitable means for producing said catalyst particles. Said means can be separated in space from the reactor or it can be an integrated part of the reactor. When using the apparatus then the means for producing catalyst particles can be located, for example, where the reactor temperature is between 250 - 2500 °C, preferably 350 - 900 °C.

In one preferred embodiment the flow through, for example, the pre-reactor, for example the hot wire generator, is preferably a mixture of hydrogen and nitrogen, where the fraction of hydrogen is preferably between 1 % and 99 % and more preferably between 5 and 50 % and most preferably approximately 7 %. The flow rate through, for example, a hot wire generator can be 1 - 10000 ccm, preferably 250 - 600 ccm.

Various energy sources can be used, for example to promote and/or impede, for example, chemical reactions and/or CBFFCNT synthesis. Examples include, but are not limited to, resistively, conductively, radiatively and/or nuclear and/or chemical reactively heated reactors and/or pre-reactors. Other energy sources can be applied to the reactor and/or pre-reactor, for example, radio-frequency, microwave, acoustic, laser induction heating and/or some other energy source such as chemical reaction can be used.

The produced one or more fullerene functionalized carbon nanotubes having one or more fullerenes and/or fullerene based molecules thereto attached by covalent bonds can be used in the preparation of various materials and/or structures.

The present invention relates further to a functional material that is made using the one or more fullerene functionalized carbon nanotubes according to the present invention.

The present invention relates further to a thick or thin film, a line, a wire or a layered or three dimensional structure that is made using said one or more fullerene functionalized carbon nanotubes and/or said functional material.

Further the present invention relates to a device that is made by using one or more fullerene functionalized carbon nanotubes, said functional material and/or said thick or thin film, line, wire or layered or three dimensional structure. Said device can comprise an electrical device, electrochemical device, an analytical device, a polymer based device, a medical device, a lighting device and/or any other device, in which preparation the fullerene functionalized carbon nanotubes and/or materials thereof according to the present invention can be used. Said device can comprise for example an electrode of a capacitor, a fuel cell or battery, a heat sink or heat spreader, a metal-matrix composite or polymer-matrix composite in a printed circuit, a transistor, a light source, a carrier for drug molecules, a molecule or cell tracer, or electron emitter in a field emission or backlight display and/or any other device in the preparation of which carbon nanotubes can be used.

The above materials and/or structures can be usable for example in the following applications: Electronics such as carbon nanotube interconnects: CNTs for on-chip interconnect applications, field-emission devices, field-effect transistors, logic gates, diodes, inverters, probes; electrochemical devices such as supercapacitors, hydrogen storage (e.g. fuel cells); analytical applications such as gas sensors, CNTs as electrode materials and/or modifiers for analytical voltammetry, biosensòrs; chromatographic applications; mechanical applications such as conducting composites for antistatic shielding, transparent conductor, shielding of electromagnetic interference, electron guns for microscopes, field emission cathodes in microwave amplifiers, field emission displays, supercapacitors, gas storage, field-effect transistors, nanotube electromechanical actuators, electrodes in lithium batteries, NT-based lamps, nanosensors, thin film polymeric solar cells, fuel cells, ultracapacitors, thermionic power supplies.

The present invention discloses a new material to be used in various applications. The advantage of the present invention is that this new fullerene functionalized carbon nanotube material allows direct manipulation of carbon nanotube properties. A further advantage is that CBFFCNTs also offer a unique route to further functionalize carbon nanotubes.

The covalently bonded fullerene-functionalized carbon nanotubes open new avenues to control the morphology and/or properties of carbon nanostructures in a one-step process. The method according to the present invention allows all or part of the processes of synthesis of CBFFCNTs, their purification, doping, functionalization, further functionalization, coating, mixing and/or deposition to be combined in one continuous procedure. Further advantage is that the catalyst synthesis, the CBFFCNT synthesis, and their functionalization, doping, coating, mixing and deposition can be separately controlled.

Further, for example, due to the charge transport between carbon nanotubes and fullerenes, electrical and/or optical properties of the material can be modified. For example a considerable enhancement in cold electron field emission have been measured from fullerene-functionalized carbon nanotubes. Further, the presence of attached fullerene molecules can be used as molecular anchors to prevent slipping of CNTs in composites, thus, improving their mechanical properties.

Further, the ability to directly synthesise CNTs having distinct regions with different electronic properties is an major advantage for many applications including, for example, memory devices, decoders and tunable quantum dots.

Further advantage is that the method according to the present invention can be used for continuous or batch production of CBFFCNT composites, wherein an additional flow of additive coating material or aerosolized particles are introduced into the CBFFCNT aerosol flow to create a complete material.

### LIST OF FIGURES

In the following section, the invention will be described in detail by means of embodiment examples with reference to accompanying drawings, in which
Figure 1 shows a) a schematic representation of covalently bonded fullerene-functionalized carbon nanotube depicting covalent bonding and b) - e) low, intermediate and high resolution images of examples of CBFFCNTs;
Figure 2 shows a block diagram of an arrangement for the method for production of CBFFCNTs, CBFFCNT composites, structures and devices;
Figure 3 shows preferred embodiments of the invention for ærosols production of CBFFCNTs, where the catalyst particles are formed by recomposing one or more catalyst particle precursors (a), where the catalyst particles are formed by a physical vapor nucleation method from a hot wire generator (b) separated in space from the reactor and (c) smoothly integrated with the reactor;
Figure 4: Number size distribution of fullerenes measured from HR-TEM images;
Figure 5: EELS spectra of different parts of CBFFCNTs showing the presence of oxygen in the covalent bond between CNTs and fullerenes;
Figure 6: Comparison of ultraviolet-visible absorption spectra of CBFFCNTs and C₆₀ and C₇₀ standards;
Figure 7: Comparison of Raman spectroscopy measurements of the samples carried out by using red (633 nm) blue (488 nm) lasers of samples prepared with high (lines 1 and 2) and low (lines 3 and 4) concentrations of functionalizing fullerenes. Inset shows details of the shift in the fullerene signal marked with arrows; -
Figure 8: MALDI-TOF spectrum, averaged over several solvents, evidencing the presence of C₆₀H₂ and C₄₂COO as well as other fullerenes containing O and/or H atoms in the bridging groups;
Figure 9: FT-IR spectra of CBFFCNTs demonstrating the presence of ethers (C-O-C) and esters (CO-O-C) in the sample;
Figure 10: Field emission properties of CBFFCNTs (synthesized in the ferrocene reactor without water vapour added) and CBFFCNTs (synthesized in the presence of 100 and 150 ppm of added water vapour): (a) Averaged current density against the electric field strength; (b) Fowler-Nordheim plot for the investigated samples; (c) Temporal behavior of the electron current at different field strengths;
Figure 11: TEM image of CBFFCNTs produced through an aerosol Iron-octanol-thiophene system (t_{furn} = 1200 °C, flow through bubbler Q_{CO} = 400 ccm and through an aerosol HWG Q_{N2/H2} = 400 ccm);
Figure 12: FT-IR spectra obtained at the conditions of CNT synthesis in the aerosol HWG method: gas composition: CO₂ - 120 ppm, H₂O - 10 ppm showing the in *situ* production of reagents on the reactor wall;
Figure 13: TEM image of CBFFCNTs from *in situ* aerosol HWG and CO as carbon source, H_{2/}N₂ (7/93) mixture through HWG, tₛₑₜ = 1000 °C and EELS measurements showing the presence of oxygen in the covalent bond between CNTs and fullerenes;
Figure 14: TEM image of CBFFCNTs from in *situ* aerosol HWG and CO as carbon source, H₂/N₂ (0.07/99.93) mixture through HWG, tₛₑₜ = 900 °C and EELS measurements showing the presence of oxygen in the covalent bond between CNTs and fullerenes;
Figure 15: EELS spectra proving the presence of oxygen in the covalently bonded CBFFCNTs produced as an aerosol. H₂/N₂ (0.07/99.93) mixture through HWG, in the presence of water of 150 ppm, tₛₑₜ = 900 °C; and
Figure 16: shows examples of bonding structures of fullerenes on nanotubes: (a) Equilibrium structure of C₄₂ connected with a CNT via ester group. (b) Equilibrium structure of C₆₀ weakly covalent bonded defect-free (8,8) CNT; (c) Equilibrium structure of a C₆₀ weakly covalently bonded above a di-vacancy on a CNT; (d) and (e) Fullerene-molecules, reminiscent of buds, covalently attached to a CNT.

### DETAILED DESCRIPTION OF THE INVENTION

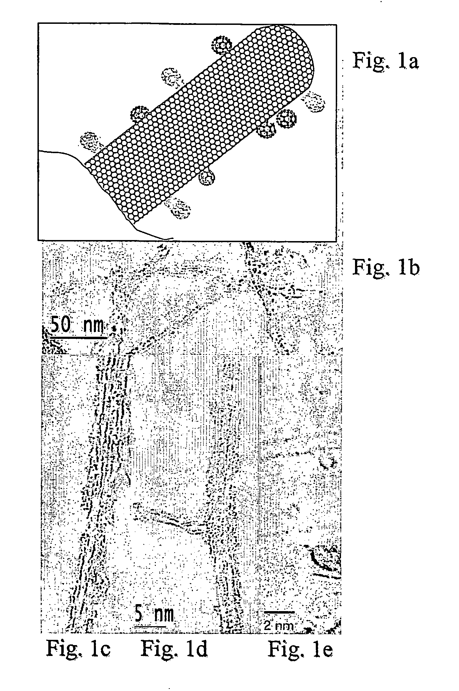

Figure la is a diagram of the structure of the new composition of matter (CBFFCNTs) showing the covalent bonding of fullerenes to CNTs. Figures 1b - 1e are TEM images of the new CBFFCNT material, wherein one or more fullerenes are covalently bonded to the outer surface of CNTs.

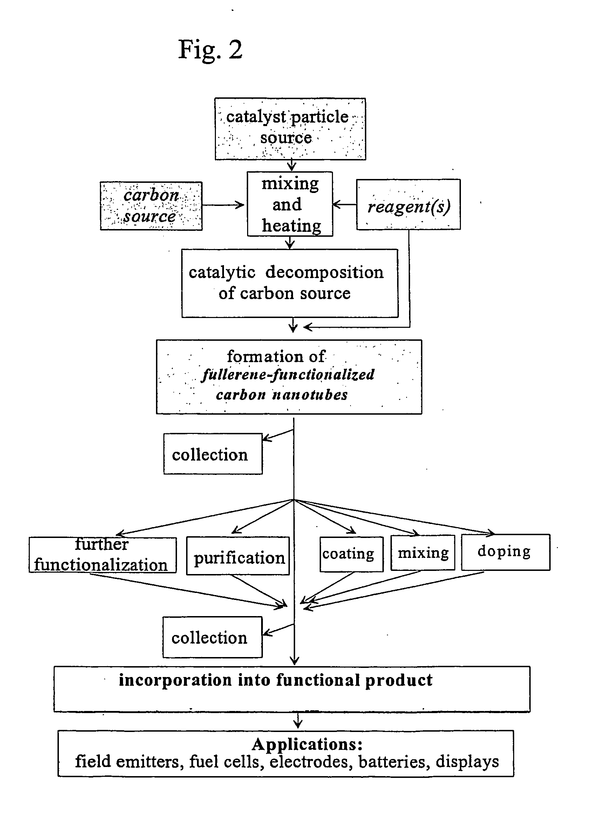

Figure 2 shows a block diagram of one embodiment of the method according to the present invention for CBFFCNT production. The first step of the method is to obtain aerosolized or substrate supported catalyst particles from a catalyst particle source. These particles can be produced as part of the process or can come from an existing source. In the reactor, the catalyst particles are heated together with one or more carbon sources and with one or more reagents. The carbon source catalytically decomposes on the surface of catalyst particles together with the reagents to form CBFFCNTs. During and/or after the formation of CBFFCNTs, the entire product or some sampled portion of the product can be selected for further processing steps such as further functionalization, purification, doping, coating and/or mixing. All or a sampled part of the resulting CBFFCNT product can then be collected directly, or incorporated into a functional product material which can further be incorporated in devices.

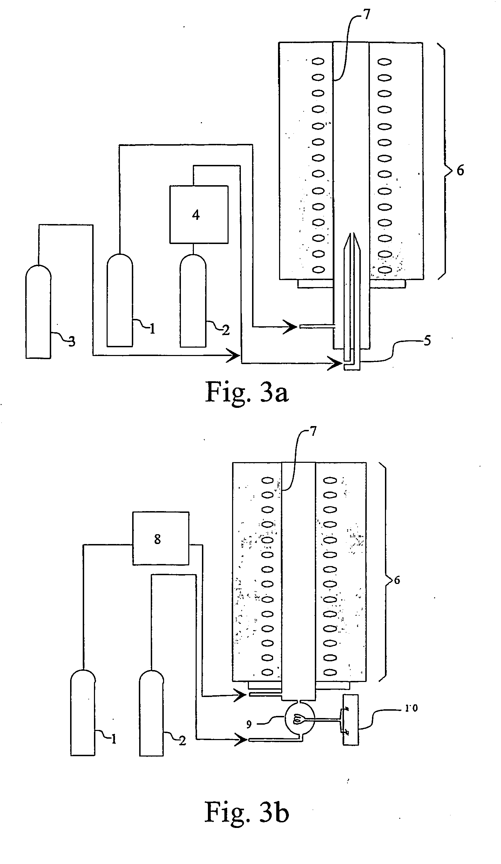

Figure 3(a) shows one embodiment of the method to realize the present invention for the continuous production of CBFFCNTs wherein catalyst particles are grown in *situ* via decomposition of a catalyst particle precursor. The precursor is introduced from source (4) via carrier gas from a reservoir (2) into the reactor (6). Subsequently, the flow containing the catalyst particle precursor is introduced into the high temperature zone of the reactor (6) through a probe (5) and mixed with additional carbon source flow (1). One or more reagents for CBFFCNT-growth are supplied from reservoir (3) and/or produced catalytically on the reactor wall (7) if the wall is composed of a suitable material which, in combination with one or more carrier gases, precursors and/or carbon sources leads to the catalytic production of suitable reagents.

Figure 3(b) shows one embodiment of the method according to the present invention for continuous production of CBFFCNTs, where the catalyst particles are formed by the physical vapor nucleation method from a hot wire generator (HWG) (9) separated in space from the reactor used for the production of one or more CBFFCNTs. In said embodiment, a carbon source and reagents are supplied by a carrier gas passing through a saturator (8). The saturator can also be used to introduce additional reagents for CBFFCNT doping, purification and/or further functionalization. The reagent for CBFFCNT growth can also be produced catalytically on the reactor wall (7) if the wall is composed of a suitable material which, in combination with one or more carrier gases, precursors and/or carbon sources leads to the catalytic production of suitable reagents. Another carrier gas is supplied from a carrier gas reservoir (2) to the HWG (9), which is operated with the help of an electric power supply (10). As the carrier gas passes over the heated wire, it is saturated by the wire material vapor. After passing the hot region of the HWG, the vapor becomes supersaturated, which leads to the formation of particles due to the vapor nucleation and subsequent vapor condensation and cluster coagulation. Inside the CBFFCNT reactor (6) or before, when needed, the two separate flows containing the catalyst particles and the carbon source and reagent(s) are mixed and subsequently heated to the reactor temperature. The carbon source can be introduced through the HWG if it does not react with the wire. Other configurations are possible according to the invention.

In order to avoid diffusion losses of the catalyst particles and to better control their size, the distance between the HWG and the location where the formation of CBFFCNT occurs, can be adjusted.

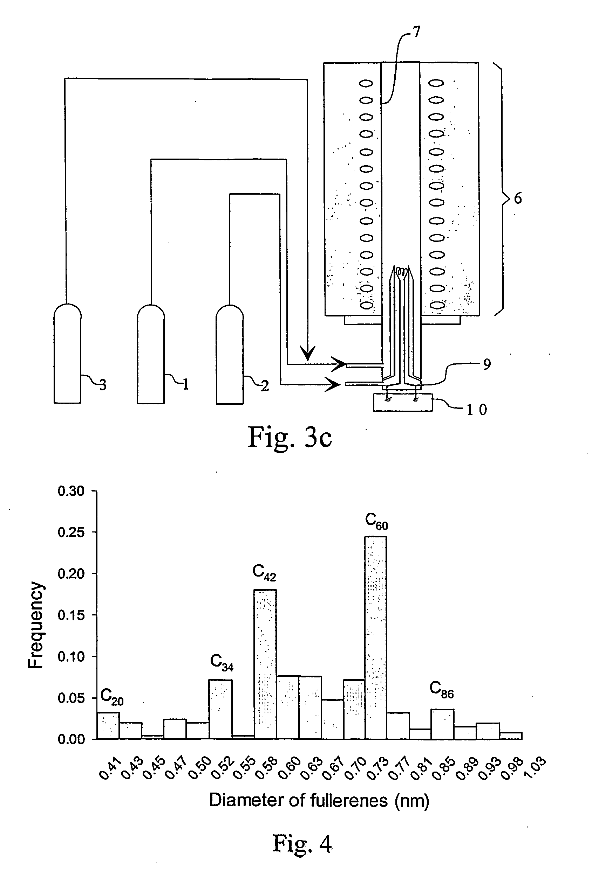

Figure 3(c) shows one embodiment of the method according to the present invention, wherein the catalyst particles are formed by a physical vapor nucleation method from a hot wire generator smoothly integrated with the reactor. Here, the HWG is located inside the first section of the reactor.

### Example 1: CBFFCNT synthesis from carbon monoxide as carbon source using ferrocene as catalyst particle source and water vapor and/or carbon dioxide as reagent(s).

Carbon source: CO.
Catalyst particle source: ferrocene (partial vapor pressure in the reactor of 0.7 Pa).
Operating furnace temperatures: 800, 1000, and 1150 °C.
Operating flow rates: CO inner flow (containing ferrocene vapor) of 300 ccm and CO outer flow of 100 ccm.
Reagent: water vapor at 150 and 270 ppm and/or carbon dioxide at 1500 - 12000 ppm.

This example was carried out in the embodiment of the present invention shown in Figure 3(a). In this embodiment, catalyst particles were grown *in situ* via ferrocene vapor decomposition. The precursor was vaporized by passing room temperature CO from a gas cylinder (2) (with a flow rate of 300 ccm) through a cartridge (4) filled with the ferrocene powder. Subsequently, the flow containing ferrocene vapour was introduced into the high temperature zone of the ceramic tube reactor through a water-cooling probe (5) and mixed with additional CO flow (1) with a flow rate of 100 ccm.

Oxidation etching agents, for example water and/or carbon dioxide, were introduced together with the carbon source.

The partial vapour pressure of ferrocenè in the reactor was maintained at 0.7 Pa. The reactor wall set temperature was varied from 800 °C to 1150 °C.

The aerosol product was collected downstream of the reactor either on silver disk filters or on transmission electron microscopy (TEM) grids.

### Example 2: CBFFCNT synthesis from a plurality of carbon sources and reagents and using hot wire generator as catalyst particle source

Carbon source: CO, thiophene and octanol.
Catalyst particle source: hot wire generator.
Catalyst material: iron wire of 0.25 mm in diameter.
Operating flow rates: CO flow of 400 ccm through thiophene-octanol (0.5/99.5) solution and hydrogen/nitrogen (7/93) flow of 400 ccm through the HWG.
Reagent: H₂, octanol and thiophene.
Operating furnace temperature: 1200 °C.

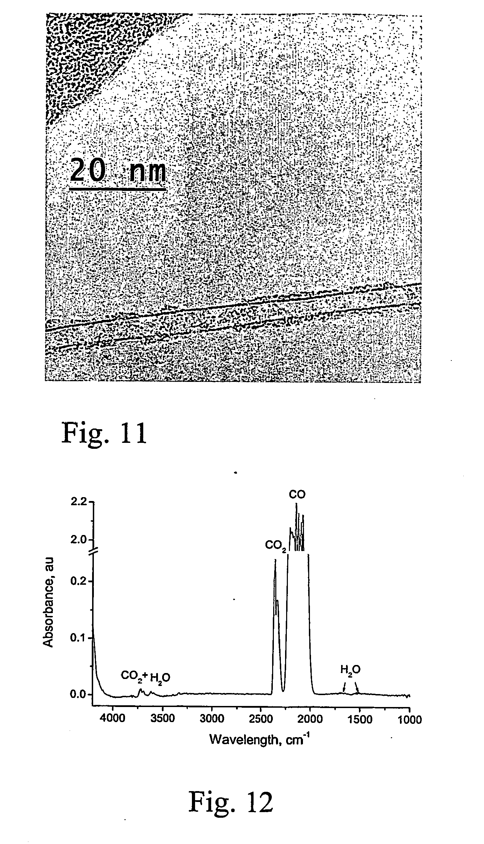

This example illustrating the synthesis of CBFFCNTs was carried out in the embodiment of the present invention shown in Figure 3(b). Catalyst particles were produced by vaporizing from a resistively heated iron wire and subsequent cooling in a H₂/N₂ flow. Next the particles were introduced into the reactor. Octanol and thiophene vapor was used as both carbon sources and reagents and were introduced via a saturator (6). Partial pressures for the octanol and thiophene vapours were 9.0 and 70.8 Pa, respectively. Carbon monoxide was used as a carrier gas, carbon source and reagent precursor and was saturated by passing it through the octanol-thiophene solution at the flow rate of Q_{CO} = 400 ccm at room temperature. The reactor walls, saturated with iron, also served as a reagent precursor since CO₂ (about 100 ppm) and water vapor (about 30 ppm) were formed on the walls of the reactor in the heating zone. The products formed with octanol-thiophene in CO are shown in Figure 11 clearly demonstrating the coating of CNTs with fullerenes.

### Example 3: CBFFCNT synthesis from carbon monoxide as carbon source using hot wire generator as catalyst particle source and reagent introduced or formed on the walls of the reactor

Reactor tube: stainless steel with a composition of Fe 53, Ni 20, Cr 25, Mn 1.6, Si, C 0.05 weight %.
Carbon source: CO.
Catalyst particle source: hot wire generator.
Catalyst material: iron wire of 0.25 mm in diameter.
Operating furnace temperature: 928 °C.
Operating flow rates: CO outer flow of 400 ccm and hydrogen/nitrogen (7/93) inner flow of 400 ccm.
Reagents: H₂, CO₂ and H₂O formed on the reactor walls.

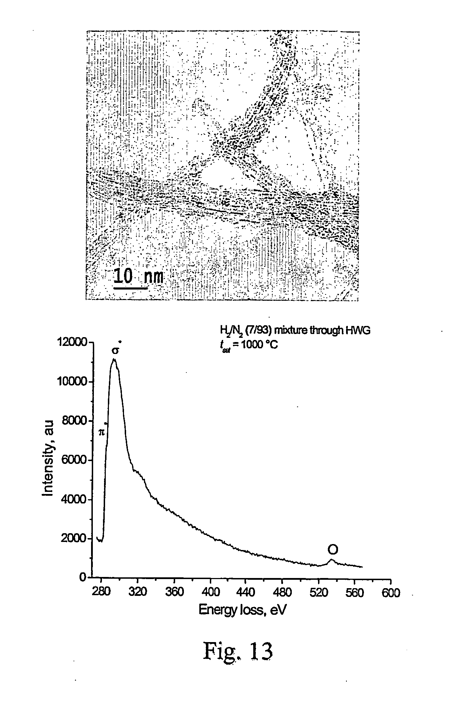

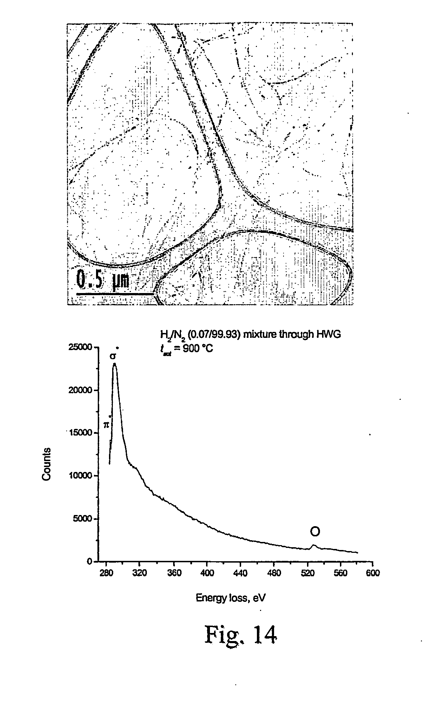

This example illustrating the synthesis of CBFFCNTs was carried out in the embodiment of the present invention shown in Figure 3(c), wherein CO was used as both a carbon source and a reagent precursor. The reactor walls, composed of mostly iron, also served as a reagent precursor since CO₂ and water vapor were formed on the walls of the reactor in the heating zone. Figure 12 shows typical FT-IR spectra obtained at the conditions of CBFFCNTs growth at reactor temperatures of 924 °C. The main gaseous products were H₂O and CO₂ with concentrations of 120 and 1540 ppm. It was experimentally found that the effluent composition did not change considerably when the iron particle source was turned off, i.e. when the current through the HWG was off. Accordingly, CO₂ and H₂O formed at the reactor walls. Figures 13-15 are examples of CBFFCNTs and their EELS spectra showing the presence of oxygen in covalent bonds between the CNT and fullerene and/or fullerene based molecule.

### Example 4: Effect of reagents and temperature

This example illustrating the effect of the reagents and/or the temperature on the amount of fullerenes and/or fullerene based molecules formed on the carbon nanotube was carried out using a ferrocene reactor and water vapor and carbon dioxide as reagents. It was found out that the optimal reagent concentrations were between 45 and 245 ppm, preferably between 125 and 185 ppm, for water and between 2000 and 6000 ppm, preferably about 2500 ppm, for carbon dioxide with the highest fullerene density above 1 fullerene/nm.

When almost no water vapor was used then the carbon nanotubes contained only a small number of fullerenes and/or fullerene based molecules. Further, it was noticed that when using high concentrations of water vapor (> 365 ppm) or carbon dioxide (> 6250 ppm), the main product contained only few fullerene-functionalized carbon nanotubes.

Further the effect of the reactor temperature on the product was studied with 145 ppm water vapor introduced in the reactor. At temperatures 1100 and 1150 °C only particles were produced. The maximum fullerene coverage was found at 1000 °C and the amount of fullerenes decreased with decreasing temperature down to 800 °C.

### Results

Figure 1 shows the typical material produced with the method according to the present invention. HR-TEM images revealed that the coating comprised fullerenes. Their spherical nature has been confirmed by tilting the samples. Statistical measurements performed on the basis of HR-TEM images revealed that the majority of bonded fullerenes comprises C₄₂ and C₆₀ (Fig. 4). Importantly, a substantial fraction is C₂₀ fullerenes, the smallest possible dodecahedra. Such structures have never been seen in samples produced by prior art fullerene production methods.

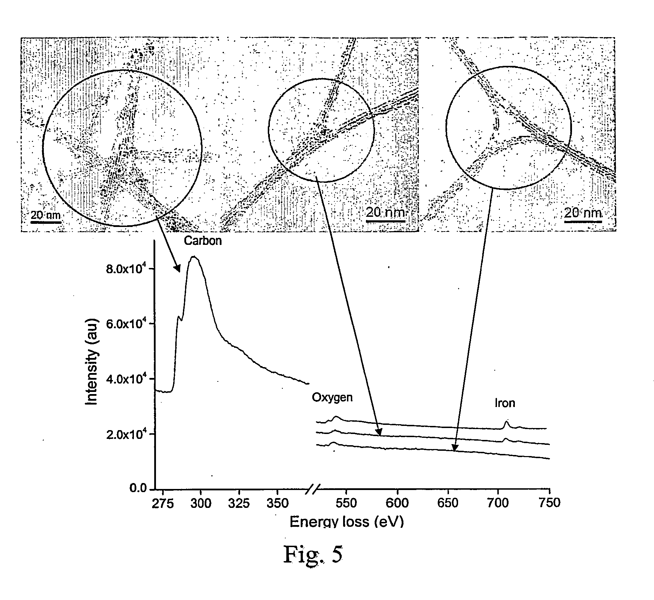

Electron Dispersive X-ray Spectroscopy (EDX) and Electron Energy Loss Spectroscopy (EELS) measurements revealed the presence of oxygen in fullerene-functionalized CNT structures. The chemical elemental analysis of the as-produced sample of fullerene-functionalized CNTs was carried out with a field emission transmission electron microscope (Philips CM200 FEG). EELS spectra of the sample synthesized by using pure hydrogen gas through the HWG are shown in Fig. 5. One can see the presence of oxygen in the fullerene-functionalized CNTs indicating a covalent bond via oxygen and/or oxygen containing bridges.

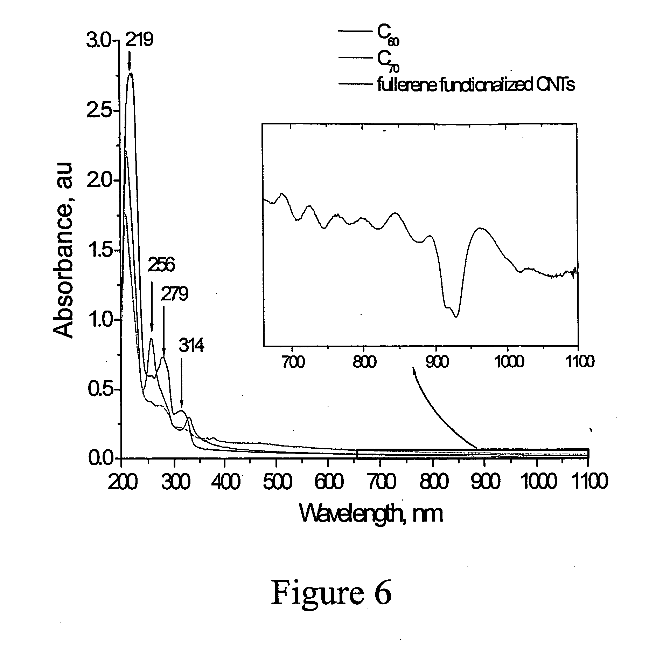

For an independent characterization of the structures in question, Matrix-Assisted Laser Desorption Ionization Time-of-Flight (MALDI-TOF) mass spectrometric, Ultraviolet-visible (UV-vis) absorption, Fourier Transform Infrared (FT-IR) and Raman spectroscopic measurements on the samples were performed. The UV-vis absorption spectra of a sample in n-hexane are consistent with the presence of both nanotubes and fullerenes (Fig. 6). The characteristic ripple structure at wavelengths above 600 nm is due to van Hove singularities known for CNTs. In addition to characteristic C₆₀ fullerene peaks (e.g., a weak peak at 256 nm), other bands at 219, 279 and 314 nm appeared shifted or different from 212 and 335 nm fullerene peaks. That can be explained by the presence of various fullerenes as well as strong asymmetry induced by covalent attachment to the nanotube. This asymmetry may remove degeneracy of the electron spectrum to reveal additional bands, i.e. the broadening of existing peaks or the appearance of new ones.

Since fullerenes are located on the surfaces of CNTs, the fullerene Raman scattering may be similar to surface enhanced Raman scattering (SERS), where metallic CNTs act as an enhancing substrate. The signal from fullerenes was strong for red laser (633 nm) irradiation (the red laser resonantly excites mostly metallic CNTs) as compared to green (514 nm) and blue (488nm) lasers for which the signal from exclusively semiconducting CNTs can be distinguished. FT, Raman (1064 nm), though out of the metallic CNT resonance wavelength (therefore only a small fraction of sufficiently thick metallic CNTs can respond), still retains very weak fullerene feature at 1400 cm⁻¹ between the D- and G-bands along with a strong fullerene feature from the *H_{g}*(1) mode at 265 cm⁻¹. This may occur because the enhancement factor for SERS increases with the wavelength even though the signal itself decreases. Raman spectra of the studied structures show a pronounced G-band at 1600 cm⁻¹, associated with CNTs, and a weak dispersive D-band at 1320-1350 cm⁻¹, depending on the excitation energy. In addition, characteristic features at 1400 cm⁻¹ and 1370 cm⁻¹, may be associated with fullerenes even though they are considerably shifted compared to the 1469 cm⁻¹ peak of the Ag(2) pentagonal mode and 1427 cm⁻¹ peak of the first-order Raman Hg(2) mode for pure C₆₀. In the case of C₆₀ modified CNTs of publication "C60 modified single - walled carbon nanotubes" by X, Li et al., Chemical Physics Letters, 337 (2003), pp. 32-36 there was almost no shift in the fullerene signal, which demonstrates that simple mechanical milling of fullerenes with CNTs produces structures fundamentally different from those described in this patent application. Such a dramatic softening of the A_{g}(2) and H_{g}(2) modes may correlate with the reconstruction in the electron spectra found in UV due to strong interaction with the CNTs.

Importantly, the Raman spectrum of C₆₀-CNT nanocomposites produced by the prior art mechanical milling of fullerenes with CNTs did not show a similar shift in the position of the C₆₀ peak indicating the fundamental difference between the compared structures.

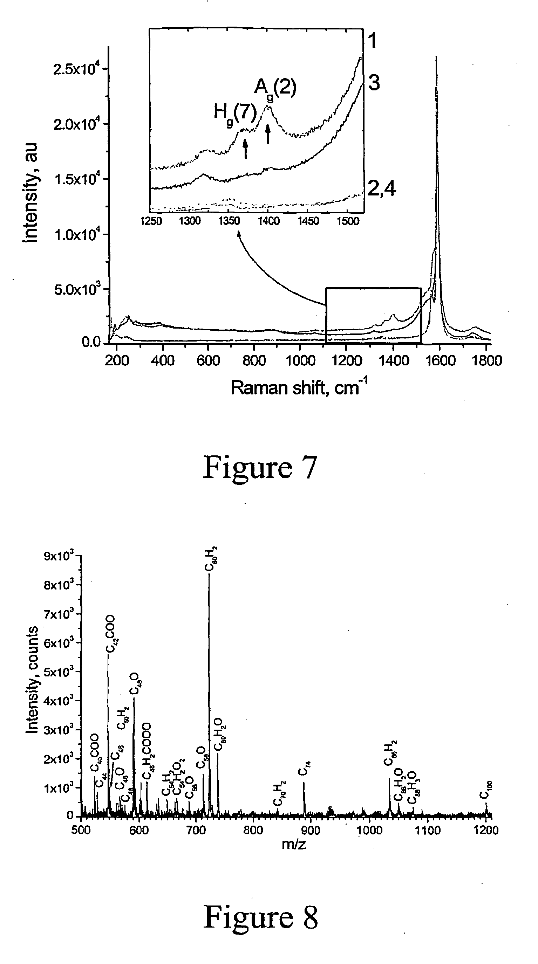

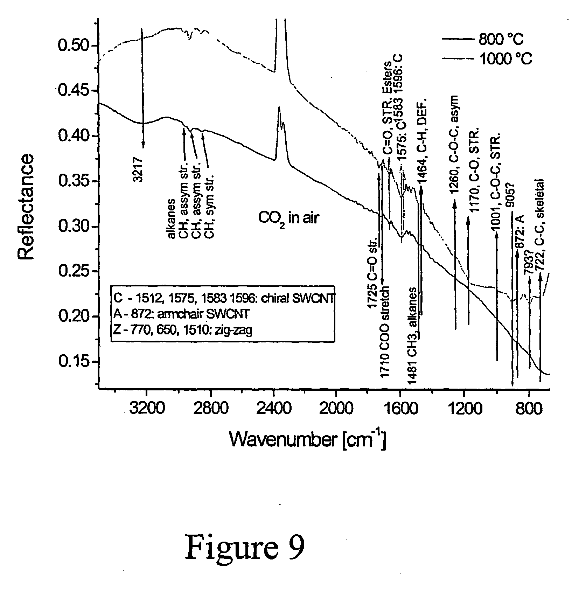

The MALDI-TOF spectrum obtained from the fullerene-functionalized CNT sample with dichloromethane as a matrix (Fig. 8) shows peaks of different ionized and hydrogenated fullerenes containing up to three oxygen atoms. The main MALDI-TOF spectrum peaks are attributed to C₆₀ (C₆₀H₂, C₆₀H₂O) and C₄₂ (C₄₂COO). Therefore on the basis of the MALDI-TOF measurements one can see that fullerenes are attached to CNTs via either ether (preferable for fullerenes larger than C₅₄) or ester (for smaller fullerenes) bridges. In order to confirm this, FT-IR measurements were performed (Fig.9). One can see from the presence of both ether and ester groups in the samples.

In order to confirm that the fullerenes observed on the CNTs are covalently bonded, it was attempted both to evaporate and to dissolve the attached fullerenes. The presence of fullerenes on the tubes after the heat and solvent treatments would indicate the covalent nature of the attachment between the fullerenes and CNTs. Thermal treatment of the samples in inert helium or argon/hydrogen atmospheres showed no changes in the observed fullerene-CNT structures. A careful washing of the FFCNTs in different solvents (hexane, toluene and decaline) did not result in any significant alteration of the examined samples. Moreover, a mass-spectrometric investigation of the solvent after the CNT washing did not reveal the presence of any dissolved fullerenes further supporting the conclusion that the fullerenes were covalently bonded to the nanotubes.

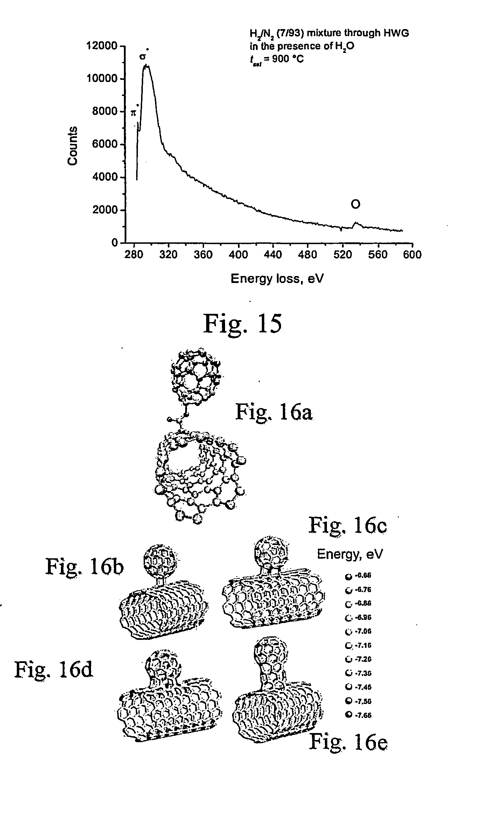

Our atomistic density-functional-theory based calculations showed that systems composed of fullerenes covalently bonded through ester groups with single vacancy nanotubes can exist, although the assumed configurations are metastable with respect to forming perfect tubes together with oxidized fullerenes (Fig. 16a). Calculations with a model Hamiltonian that has been successfully applied to describe the formation of peapods and the melting of fullerenes showed that, in addition to oxygen-based bridges, i.e. oxygen containing bridging groups, some fullerenes are directly covalently bonded to CNTs or even make hybrid structures. Results for the different attachments of fullerenes on an (8, 8) nanotube are presented in Fig. 16b-e. One of the viable hybrid geometries involves imperfect fullerenes, for example hemisphere-like fullerenes, covalently bonded to defective nanotubes. Such structures covalently bonded, reminiscent of buds on a branch, are depicted in Figs. 16d and 16e and can be recognised in HR-TEM images. The local binding energies in these structures suggest that none of the atoms is less stable than those in a C₆₀ molecule.

As for the mechanism of the hybrid material formation, HR-TEM observations suggest that both fullerenes and CNTs originate from graphitic carbon precipitated at the surface of, for example, Fe nanoparticles catalysing CO disproportionation. This is supported by Molecular Dynamics simulation results predicting that various carbon nanostructures are formed at the surface of such catalysts. One mechanism for single-walled CNT formation is at steady-state conditions wherein carbon continually precipitates to the catalyst particle surface to form an uninterrupted layer, partially covering the catalyst particle. The presence of heptagonal carbon rings in this layer is a prerequisite for the negative Gaussian curvature found at the location where the nanotube grows from the Fe nanoparticle. This negative curvature, together with instabilities in the forming carbon structure, induced by oxidation etching curling carbon layers, can cause a spontaneous restructuring of the incipient carbon sheet to form fullerenes.

The uniqueness of this method to produce fullerenes is strongly supported by two facts. First, although C₆₀ fullerene synthesis is typically not favoured in the presence of abundant hydrogen (since it can damage incipient cages), hydrogen can quickly terminate available dangling bonds and thus stabilise the smaller fullerenes. It is worth noting that hydrogen was either introduced or in *situ* formed in the described experimental setups. Second, the smallest C₂₀ fullerenes have not been observed in conventional prior art processes, because, unlike C₆₀, they are not formed spontaneously in carbon condensation or cluster annealing processes.

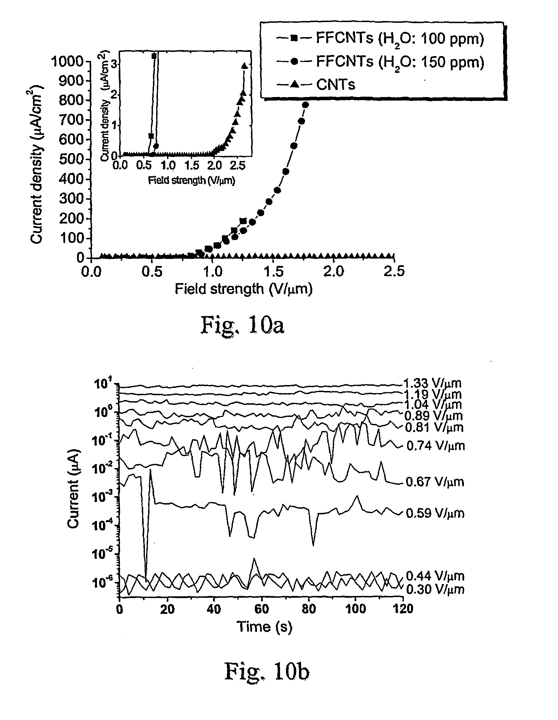

Fullerene-functionalized CNTs are interesting for cold electron field emission (FE) due to the large number of highly curved surfaces acting as emission sites on conductive CNTs. In the material according to the present invention the fullerenes can act as electron emission sites and can lower the FE threshold voltage and increase the emission current. This was confirmed by measuring the FE from a mat of in-plane deposited non-functionalized CNTs and fullerene-functionalized CNTs. The measurements were done using 450 µm and 675 µm spacer between the cathode and anode, and a 2 mm hole. The averaged current density versus the electric field is shown in Fig. 10a together with the results obtained from the best known field emitters. The FFCNTs demonstrate a low field threshold of about 0,65 V/µm and a high current density compared to non-functionalized CNTs. Note that the non-functionalized CNTs synthesised at similar conditions but without adding etching agents had a field threshold for FE as high as 2 V/µm. The Fowler-Nordheim plot in the inset of Fig. 10a has a characteristic knee at low currents that corresponds to temporal current pulses which are a manifestation of the discrete nature of electron emission sites (see Fig. 10b). Research demonstrated similar FE performance from the as-produced CoMoCAT sample of single-walled CNTs.

The chemical nature of the bonding between CNTs and fullerenes can also be confirmed by two additional experimental observations. First it is known that non-covalently attached fullerenes are highly mobile on the surface of CNTs under exposure to a TEM beam, while our TEM observations showed fullerenes to be stationary. Second, FE measurements demonstrated very stable and reproducible electron emission from the CBFFCNT-samples. If the fullerenes were not strongly bonded to CNTs, the effect of their detachment would be experimentally observed as a change in the shape of the current via field strength curve over time.

The invention is not limited merely to the embodiment examples referred to above; instead many modifications are possible as defined by the claims.

## Claims

1. A fullerene functionalized carbon nanotube, comprising one or more fullerenes and/or fullerene based molecules bonded to the carbon nanotube, **characterised in that** the bond between said fullerenes and/or fullerene based molecules and said carbon nanotube is covalent and is formed on the outer surface wall and/or inner surface wall of said carbon nanotube.

2. The fullerene functionalized carbon nanotube according to claim 1, **characterised in that** the fullerene and/or fullerene based molecule comprises 20 - 1000 atoms.

3. The fullerene functionalized carbon nanotube according to any of claims 1 - 2, **characterised in that** the fullerene and/or fullerene based molecule are/is covalently bonded via one or more bridging groups and/or are/is directly covalently bonded.

4. The fullerene functionalized carbon nanotube according to claim 3. **characterised in that** the bridging group comprises oxygen, hydrogen, nitrogen, sulphur, an amino, a thiol, an ether, an ester, a carboxylic group and/or a carbon-containing group.

5. The fullerene functionalized carbon nanotube according to claim 3. **characterised in that** the fullerene and/or fullerene based molecule are/is directly covalently bonded through one or more carbon bonds.

6. The fullerene functionalized carbon nanotube according to any of claims 1 - 5. **characterised in that** said carbon nanotube comprises a single, a double or a multiple walled carbon nanotube or a composite carbon nanotube.

7. The fullerene functionalized carbon nanotube according to any of claims 1 - 6. **characterised in that** said carbon nanotube is formulated as a solid, liquid and/or gas dispersion, a solid structure, a powder, a paste, a colloidal suspension and/or is deposited on a surface and/or is synthesized on a surface.

8. The fullerene functionalized carbon nanotube according to any of claims 1 - 7, **characterised in that** it is bonded through one or more fullerenes and/or fullerene based molecules to one or more carbon nanotubes and/or fullerene functionalized carbon nanotubes.

9. A method for producing at least one fullerene functionalized carbon nanotube comprising at least one fullerene and/or a fullerene based molecule covalently bonded to the outer surface and/or inner surface of said at least one carbon nanotube, **characterised in that** the method comprises:
providing at least one catalyst particle to a reactor heated to between 250 and 2500 °C;
providing a gas flow to said reactor wherein the gas comprises at least one carbon source;
providing at least two reagents including CO₂ and H₂O, or precursors thereof to obtain the concentration of H₂O between 45 and 245 ppm and the concentration of CO₂ between 2000 and 6000 ppm.
releasing carbon from the carbon source into or onto one or more catalyst particles in the presence of the reagents; and
collecting said at least one fullerene functionalized carbon nanotube comprising at least one fullerene and/or a fullerene based molecule covalently bonded to a wall of said at least one carbon nanotube.

10. The method according to claim 9, **characterised in that** the carbon source is selected from a group, which consists of methane, ethane, propane, ethylene, acetylene, benzene, toluene, xylene, trimethylbenzene, methanol, ethanol, octanol, tiophene and carbon monoxide.

11. The method according to claim 9. **characterised in that** the reagent is an etching agent.

12. The method according to claims 9 or 11. **characterised in that** the reagent is selected from a group, which consists of hydrogen, nitrogen, water, carbon dioxide, nitrous oxide, nitrogen dioxide, oxygen, ozone, carbon monoxide, octanol, thiophene and hydride.

13. The method according to claim 9, **characterised in that** the catalyst particle comprises a metal, preferably a transition metal and/or a combination of metals and/or transition metals.

14. The method according to claim 9 or 13, **characterised in that** the catalyst particle comprises iron, cobalt, nickel, chromium, molybdenum and/or palladium.

15. The method according to any of claims 9, 13 or 14, **characterised in that** the catalyst particle is produced using a chemical precursor and/or by heating a metal or metal containing substance.

16. The method according to any of claims 9 - 15, **characterised in that** the method further comprises the following step:
introducing one or more additional reagents.

17. The method according to any of claims 9 - 16, **characterised in that** the method further comprises the following step:
introducing one or more additives to produce a fullerene functionalized carbon nanotube composite material.

18. The method according to any of claims 9 - 17, **characterised in that** the method further comprises the following step:
collecting the produced one or more fullerene functionalized carbon nanotubes and/or the fullerene functionalized carbon nanotube composite material in a solid, liquid and/or gas dispersion, a solid structure, a powder, a paste, a colloidal suspension and/or as a film and/or surface deposition.

19. The method according to any of claims 9 - 18, **characterised in that** the method further comprises the following step:
depositing a dispersion of produced fullerene functionalized carbon nanotubes and/or fullerene functionalized carbon nanotube composite material onto a surface and/or into a matrix and/or a layered structure and/or a device.

20. The method according to any of claims 9 - 19, **characterised in that** the fullerene functionalized carbon nanotubes are produced in a gas phase as an aerosol and/or on a substrate.

21. A functional material, wherein the function of the material is at least one of field emission, light emission, electric conduction, thermal conduction, fuel cell, battery, metal-matrix composite, polymer-matrix composite, capacitor, electrode, transistor, diode, drug molecule carrier **characterised in that** it comprises at least one fullerene functionalized carbon nanotube according to any one of claims 1 to 8.

22. A thick or thin film, a line, a wire or a layered or three dimensional structure, **characterised in that** it comprises one or more fullerene functionalized carbon nanotubes according to any one of claims 1 to 8.

23. Using one or more fullerene functionalized carbon nanotubes in accordance to any one of claims 1 to 8 in preparation of a device.

## Patentansprüche

1. Mit Fulleren funktionalisiertes Kohlenstoffnanoröhrchen, umfassend ein oder mehrere Fullerene und/oder auf Fulleren basierte Moleküle, die mit dem Kohlenstoffnanoröhrchen verbunden sind, **dadurch gekennzeichnet, dass** die Bindung zwischen den Fullerenen und/der auf Fulleren basierten Molekülen und dem Kohlenstoffnanoröhrchen kovalent ist und auf der äußeren Oberflächenwand und/oder inneren Oberflächenwand des Kohlenstoffnanoröhrchens gebildet ist.

2. Mit Fulleren funktionalisiertes Kohlenstoffnanoröhrchen nach Anspruch 1, **dadurch gekennzeichnet, dass** das Fulleren und/oder auf Fulleren basierte Molekül 20 - 1000 Atome umfasst.

3. Mit Fulleren funktionalisiertes Kohlenstoffnanoröhrchen nach einem der Ansprüche 1 bis 2, **dadurch gekennzeichnet, dass** das Fulleren und/oder das auf Fulleren basierte Molekül kovalent über eine oder mehrere Brückengruppen gebunden sind/ist und/oder direkt kovalent gebunden sind/ist.

4. Mit Fulleren funktionalisiertes Kohlenstoffnanoröhrchen nach Anspruch 3, **dadurch gekennzeichnet, dass** die Brückengruppe Sauerstoff, Wasserstoff, Stickstoff, Schwefel, eine Amino-, eine Thiol-, eine Äther-, eine Ester-, eine Karboxylgruppe und/oder eine Kohlenstoff-enthaltende Gruppe umfasst.

5. Mit Fulleren funktionalisiertes Kohlenstoffnanoröhrchen nach Anspruch 3, **dadurch gekennzeichnet, dass** das Fulleren und/oder das auf Fulleren basierte Molekül direkt kovalent durch eine oder mehrere Kohlenstoffbindungen gebunden sind/ist.

6. Mit Fulleren funktionalisiertes Kohlenstoffnanoröhrchen nach einem der Ansprüche 1 bis 5, **dadurch gekennzeichnet, dass** das Kohlenstoffnanoröhrchen ein einzelwandiges, ein doppelwandiges oder ein mehrwandiges Kohlenstoffnanoröhrchen oder ein Komposit-Kohlenstoffnanoröhrchen ist.

7. Mit Fulleren funktionalisiertes Kohlenstoffnanoröhrchen nach einem der Ansprüche 1 bis 6, **dadurch gekennzeichnet, dass** das Kohlenstoffnanoröhrchen als eine feste, flüssige und/oder Gas-Dispersion formuliert ist, eine feste Struktur, ein Pulver, eine Paste, eine koloidale Suspension und/oder auf einer Oberfläche abgeschieden ist und/oder auf einer Oberfläche synthetisiert ist.

8. Mit Fulleren funktionalisiertes Kohlenstoffnanoröhrchen nach einem der Ansprüche 1 bis 7, **dadurch gekennzeichnet, dass** es durch ein oder mehrere Fullerene und/oder auf Fulleren basierte Moleküle mit einem oder mehreren Kohlenstoffnanoröhrchen und/oder mit Fulleren funktionalisierten Kohlenstoffnanoröhrchen gebunden ist.

9. Verfahren zum Herstellen wenigstens eines mit Fulleren funktionalisierten Kohlenstoffnanoröhrchens, umfassend wenigstens ein Fulleren und/oder ein auf Fulleren basiertes Molekül, das kovalent an der äußeren Oberfläche und/oder inneren Oberfläche des wenigstens einen Kohlenstoffnanoröhrchens gebunden, **dadurch gekennzeichnet, dass** das Verfahren umfasst:
Bereitstellen wenigstens eines Katalysatorteilchens an einem Reaktor, der auf eine Temperatur zwischen 250 und 2500°C geheizt wird;
Bereitstellen eines Gasflusses an dem Reaktor, wobei das Gas wenigstens eine Kohlenstoffquelle umfasst;
Bereitstellen von wenigstens zwei Reagenzien, die CO₂ und H₂O aufweisen, oder Präkursoren daraus, um eine H₂O-Konzentration zwischen 45 und 145 ppm und eine CO₂-Konzentration zwischen 2000 und 6000 ppm zu erhalten;
Entlassen von Kohlenstoff aus der Kohlenstoffquelle in oder auf einen oder mehrere Katalysatorpartikel in Gegenwart der Reagenzien; und
Sammeln des wenigstens einen Fulleren funktionalisierten Kohlenstoffnanoröhrchens, das wenigstens ein Fulleren und/oder ein auf Fullerenen basiertes Molekül umfasst, das kovalent an einer Wand des wenigstens einen Kohlenstoffnanoröhrchens gebunden ist.

10. Verfahren nach Anspruch 9, **dadurch gekennzeichnet, dass** die Kohlenstoffquelle aus einer Gruppe gewählt ist, die aus Methan, Ethan, Propan, Ethylen, Acetylen, Benzen, Toluen, Xylen, Trimethylbenzen, Methanol, Ethanol, Octanol, Thiophen und Kohlenstoffmonoxid besteht.

11. Verfahren nach Anspruch 9, **dadurch gekennzeichnet, dass** das Reagenz ein ätzendes Agens ist.

12. Verfahren nach Anspruch 9 oder 11, **dadurch gekennzeichnet, dass** das Reagenz aus einer Gruppe gewählt ist, die aus Wasserstoff, Stickstoff, Wasser, Kohlenstoffdioxid, Distickstoffmonoxid, Stickstoffdioxid, Sauerstoff, Ozon, Kohlenstoffmonoxid, Octanol, Thiophen und Hydrid besteht.

13. Verfahren nach Anspruch 9, **dadurch gekennzeichnet, dass** das Katalysatorpartikel ein Metall umfasst, vorzugsweise ein Übergangsmetall und/oder eine Kombination aus Metallen und/oder Übergangsmetallen.

14. Verfahren nach Anspruch 9 oder 13, **dadurch gekennzeichnet, dass** das Katalysatorteilchen Eisen umfasst, Kobalt, Nickel, Chrom, Molybdän und/oder Palladium.

15. Verfahren nach einem der Ansprüche 9, 13 oder 14, **dadurch gekennzeichnet, dass** das Katalysatorpartikel unter Verwendung eines chemischen Präkursors und/oder durch Erwärmen eines Metalls oder einer Metall enthaltenden Substanz hergestellt wird.

16. Verfahren nach einem der Ansprüche 9 bis 15, **dadurch gekennzeichnet, dass** das Verfahren weiter den folgenden Schritt umfasst:
Einführen eines oder mehrerer zusätzlicher Reagenzien.

17. Verfahren nach einem der Ansprüche 9 bis 16, **dadurch gekennzeichnet, dass** das Verfahren weiter den folgenden Schritt umfasst:
Einführen eines oder mehrerer Additive, um ein mit Fulleren funktionalisiertes Kohlenstoffnanoröhrchen-Kompositmaterial herzustellen.

18. Verfahren nach einem der Ansprüche 9 bis 17, **dadurch gekennzeichnet, dass** das Verfahren weiter den folgenden Schritt umfasst:
Sammeln des hergestellten einen oder mehreren mit Fulleren funktionalisierten Kohlenstoffnanoröhrchen und/oder des mit Fulleren funktionalisierten Kohlenstoffnanoröhrchen-Kompositmaterials in einer festen, flüssigen und/oder Gas-Dispersion, einer festen Struktur, einem Pulver, einer Paste, einer kolloidalen Suspension und/oder als ein Film- und/oder Oberflächenablagerung.

19. Verfahren nach einem der Ansprüche 9 bis 18, **dadurch gekennzeichnet, dass** das Verfahren weiter den folgenden Schritt umfasst:
Abscheiden einer Dispersion mit hergestellten mit Fulleren funktionalisierten Kohlenstoffnanoröhrchen und/oder eines mit Fulleren funktionalisierten Kohlenstoffnanoröhrchen-Kompositmaterials auf einer Oberfläche und/oder in einer Matrix und/oder einer geschichteten Struktur und/oder einer Vorrichtung.

20. Verfahren nach einem der Ansprüche 9 bis 19, **dadurch gekennzeichnet, dass** die mit Fulleren funktionalisierten Kohlenstoffnanoröhrchen in einer Gasphase als ein Aerosol und/oder auf einem Substrat hergestellt werden.

21. Funktionales Material, wobei die Funktion des Materials wenigstens eine der folgenden ist: Feldemission, Lichtemission, elektrische Leitung, thermische Leitung, Kraftstoffzelle, Batterie, Metall-Matrix-Komposit, Polymer-Matrix-Komposit, Kapazität, Elektrode, Transistor, Diode, Heilmittel-Molekülträger, **dadurch gekennzeichnet, dass** es wenigstens ein mit Fulleren funktionalisiertes Kohlenstoffnanoröhrchen nach einem der Ansprüche 1 bis 8 umfasst.

22. Dick- und/oder Dünnfilm, Leitung, Draht oder eine geschichtete oder dreidimensionale Struktur, **dadurch gekennzeichnet, dass** er/sie ein oder mehrere mit Fulleren funktionalisierte Kohlenstoffnanoröhrchen nach einem der Ansprüche 1 bis 8 umfasst.

23. Verwenden eines oder mehrerer mit Fulleren funktionalisierten Kohlenstoffnanoröhrchen in Übereinstimmung mit einem der Ansprüche 1 bis 8 bei der Erstellung einer Vorrichtung.

## Revendications

1. Nanotube de carbone fonctionnalisé au fullerène, comprenant un ou plusieurs fullerènes et/ou molécules basé sur du fullerène liés à un nanotube de carbone, **caractérisé en ce que** la liaison entre lesdits fullerènes et/ou molécules basées sur du fullerène et ledit nanotube de carbone est covalente et est formée sur la paroi de surface externe et/ou la paroi de surface interne dudit nanotube de carbone.

2. Nanotube de carbone fonctionnalisé au fullerène selon la revendication 1, **caractérisé en ce que** le fullerène et/ou la molécule basée sur du fullerène comprend de 20 à 1000 atomes.

3. Nanotube de carbone fonctionnalisé au fullerène selon l'une quelconque des revendications 1 ou 2, **caractérisé en ce que** le fullerène et/ ou la molécule basée sur du fullerène sont/est lié(s) par une liaison covalente par l'intermédiaire d'un ou de plusieurs groupes de pontage et/ou sont/est directement relié(s) par une liaison covalente.

4. Nanotube de carbone fonctionnalisé au fullerène selon la revendication 3, **caractérisé en ce que** le groupe de pontage comprend de l'oxygène, hydrogène, azote, sulfure, amino, thiol, ester, groupe carboxylique et/ou un groupe contenant du carbone.

5. Nanotube de carbone fonctionnalisé au fullerène selon la revendication 3, **caractérisé en ce que** le fullerène et/ou la molécule basée sur du fullerène sont/est directement relié(s) par une liaison covalente par une ou plusieurs liaisons carbones.

6. Nanotube de carbone fonctionnalisé au fullerène selon l'une quelconque des revendications 1 à 5, **caractérisé en ce que** le nanotube de carbone comprend un nanotube de carbone à simple, double, ou parois multiple ou un nanotube de carbone en composite.

7. Nanotube de carbone fonctionnalisé au fullerène selon l'une quelconque des revendications 1 à 6, **caractérisé en ce que** ledit nanotube de carbone est formulé de manière à être une dispersion solide, liquide et/ou gazeuse, une structure solide, une poudre, une pâte, une suspension colloïdal et/ou est déposée sur la surface et/ou synthétisé sur la surface.

8. Nanotube de carbone fonctionnalisé au fullerène selon l'une quelconque des revendications 1 à 7, **caractérisé en ce qu'**il est lié par un ou plusieurs fullerènes et/ou molécules basées sur du fullerène à un ou plusieurs nanotubes de carbone et/ou nanotubes de carbones fonctionnalisé au fullerène.

9. Procédé pour produire au moins un nanotube de carbone fonctionnalisé au fullerène comprenant au moins un fullerène et/ou une molécule basée sur du fullerène lié par une liaison covalente à la surface externe et/ou la surface interne dudit au moins un nanotube de carbone, **caractérisé en ce que** le procédé comprend les étapes :
- fournir au moins une particule catalytique à un réacteur chauffé entre 250 et 2500°C ;
- fournir un flux de gaz audit réacteur dans lequel le gaz comprend au moins une source de carbone ;
- fournir au moins deux réactifs incluant le CO₂ et H₂O, ou des précurseurs de ceux-ci pour obtenir une concentration en H₂O entre 45 et 245 ppm et une concentration en CO₂ entre 2000 et 6000 ppm ;
- relâcher le carbone de la source de carbone à l'intérieur ou sur une ou plusieurs particules de catalyseur en présence des réactifs; et
- collecter ledit au moins un nanotube de carbone fonctionnalisé au fullerène comprenant au moins un fullerène et/ou une molécule basée sur du fullerène lié par une liaison covalente à une paroi dudit au moins nanotube de carbone.

10. Procédé selon la revendication 9, **caractérisé en ce que** la source de carbone est sélectionnée à partir du groupe consistant en du méthane, éthane, propane, éthylène, acétylène, benzène, toluène, xylène, triméthylbenzène, méthanol, éthanol, octanol, tiophène, et le monoxyde de carbone.

11. Procédé selon la revendication 9, **caractérisé en ce que** le réactif est un réactif agent décapant.

12. Procédé selon les revendications 9 ou 11, **caractérisé en ce que** le réactif est sélectionné parmi le groupe consistant en l'hydrogène, l'azote, l'eau, le dioxyde de carbone, le protoxyde d'azote, le dioxyde d'azote, l'oxygène, l'ozone, le monoxyde de carbone, l'octanol, le thiophène et l'hydrure.

13. Procédé selon la revendication 9, **caractérisé en ce que** la particule catalyseur comprend du métal, de préférence un métal de transition et/ou une combinaison de métaux et/ou de métaux de transition.

14. Procédé selon la revendication 9 ou 13, **caractérisé en ce que** la particule catalyseur comprend du fer, du cobalt, du chrome, du molybdène et/ou du palladium.

15. Procédé selon l'une quelconque des revendications 9, 13 ou 14, **caractérisé en ce que** la particule catalyseur est produite en utilisant un précurseur chimique et/ou en chauffant le métal ou la substance contenant du métal.

16. Procédé selon l'une quelconque des revendications 9 à 15, **caractérisé en ce que** le procédé comprend en outre l'étape suivante :
- introduire un ou plusieurs réactifs.

17. Procédé selon l'une quelconque des revendications 9 à 16, **caractérisé en ce que** le procédé comprend en outre l'étape suivante :
- introduire un ou plusieurs additifs pour produire un matériau composite en nanotube de carbone fonctionnalisé au fullerène.

18. Procédé selon l'une quelconque des revendications 9 à 17, **caractérisé en ce que** le procédé comprend en outre l'étape suivante :
- collecter les un ou plusieurs nanotubes de carbones fonctionnalisé au fullerène et/ou matériau composite en nanotube de carbone fonctionnalisé au fullerène dans une dispersion solide, liquide et ou gazeuse, une structure solide, une poudre, une pâte, une suspension colloïdal et/ou un film et/ou un dépôt de surface.

19. Procédé selon l'une quelconque des revendications 9 à 18, **caractérisé en ce que** le procédé comprend en outre l'étape suivante :
- déposer une dispersion des nanotubes de carbone fonctionnalisés au fullerène et/ou du matériau composite en nanotube de carbone fonctionnalisé au fullerène produits sur la surface et/ou dans une matrice et/ou une structure en couches et/ou un dispositif.

20. Procédé selon l'une quelconque des revendications 9 à 19, **caractérisé en ce que** le les nanotubes de carbone fonctionnalisés au fullerène sont produits en phase gazeuse en aérosol et/ou sur un substrat.

21. Matériau fonctionnalisé, dans lequel la fonction du matériau est au moins l'une parmi le groupe comprenant : émission d'un champ, l'émission de lumière, la conduction d'électricité, la conduction de chaleur, une pile à combustible, une batterie, un composite à matrice métallique, un composite à matrice polymère, un condensateur, une électrode, un transistor, un diode, un transporteur de molécule de médicament **caractérisé en ce qu'**il comprend au moins un nanotube de carbone fonctionnalisé au fullerène selon l'une quelconque des revendications 1 à 8.

22. Film fin ou épais, une corde, un fil ou une structure en couches ou en trois dimensions, **caractérisé en ce qu'**il comprend un ou plusieurs nanotubes de carbone fonctionnalisé au fullerène selon l'une quelconque des revendications 1 à 8.

23. Utilisation d'un ou de plusieurs nanotubes de carbone fonctionnalisé au fullerène selon l'une quelconque des revendications 1 à 8 pour la préparation d'un dispositif.
